# EUROPEAN PATENT SPECIFICATION

(11) **EP 0 802 039 B1**
(45) Date of publication and mention of the grant of the patent: **04.10.2001**
(21) Application number: 97830141.4
(22) Date of filing: 25.03.1997
(51) Int. Cl.: B29D 31/515

(54) **Injection moulding method for EVA-soles, having a treading surface with coloured sections**
Verfahren zur Herstellung von spritzgegossenen und bereichsweise gefärbten EVA-Sohlen
Procédé de fabrication en moulage par injection de semelles EVA, avec des parties colorées prédéterminées

(30) Priority: 19.04.1996 IT AN960009
(43) Date of publication of application: 22.10.1997
(73) Proprietor: Finproject - S.P.A., Roma (IT)
(72) Inventor: Bisconti, Bruno, Contrada Cavallino (IT)
(74) Representative: Baldi, Claudio

(56) References cited:
- US-A- 4 762 654
- US-A- 5 318 645
- US-A- 5 362 435

## Description

This patent application concerns an injection moulding method for soles having a treading surface with coloured sections, and produced with expansible and cross-linking "EVA" compounds.

The patent protection is also extended to the sole obtained with the method according to the invention.

The abbreviation "EVA" refers to "vinyl-acetate ethylene copolymer" which, according to the type of additive used, may be thermoplastic or expansible and cross-linking.

In the case of the latter type, an expanding powder additive is used which decomposes at a specific temperature to produce gases which give rise to a typical phenomenon which occurs in injection moulding using this type of "EVA", consisting of the instantaneous expansion of the part as soon as the mould is opened.

In particular the dimensions of the part increase rapidly while the proportions and shape remain unaltered thus maintaining a ratio of perfect similarity with respect to the impression of the matrix.

Expansible and cross-linking "EVA", thanks above all to its low cost, is widely used in the footwear sector for the production of inexpensive injection moulded soles.

To date it has not been possible to produce injection moulded soles in expansible and cross-linking "EVA" compounds, having a treading surface with one or more different coloured sections with respect to the sole; in fact, this can only be achieved by painting the single-colour sole after moulding.

The US 5 318 645 patent describes an EVA insole manufacturing process comprising a first moulding portion and a second moulding portion, both realised by mixing an EVA resin with a foaming agent according to a predetermined proportion, and squeezing the resulting mixture into a flat block; then each flat block is cut into a first moulding portion and a second moulding portion, so that the first moulding portion has an opening for receiving the second moulding portion; said second moulding portion is placed within the opening of the first moulding portion before heat foaming both the first and the second moulding portions together in a mould in order to form an integrally moulded article which is destined to be placed inside a hydraulic press in order to obtain an insole having the desired shape .

The above mentioned patent does not provide any teaching relevant to the manufacture of an EVA insole whose treading surface is provided with coloured inserts moulded during a different stage with respect to the moulding phase of the insole and whose shape and dimensions remain unchanged during the moulding phase of the insole.

The purpose of this invention is to design a method which makes it possible to obtain during the same moulding stage, a sole whose treading surface has different coloured sections with respect to the colour of the sole, in order to cut the costs currently sustained to paint the sole after moulding.

The method in question is based on the idea of equipping the sole mould with one or more inserts premoulded in the same material used to mould the sole but of a different colour; the inserts are moulded by heating the expansible and cross-linking "EVA" compound granules to melting point without reaching the higher temperature which triggers the cross-linking and decomposition process of the expanding fillers.

The method in question also involves the use of a special mould which, on one hand, ensures that the inserts pre-mounted during the injection stage are securely fixed, and on the other prevents mixing, along the edge of the inserts, between the moulding material of the sole and that of the inserts, which would produce unattractive streaks or stains of different shades of colour with respect to the colours of the two materials.

It is important to consider in fact that the granules of the "EVA" based compound are heated to melting point before being injected into the mould, in which the inserts also reach melting temperature, so that one of the most difficult problems resolved was in fact that of avoiding with absolutely security the possibility that streaks or halos of different shades would appear on the treading surface due to the mixing of different coloured molten "EVA" granules.

In order to resolve this problem, the method according to the invention entails the use of a special mould with an impression having the same number of annular ribs on its bottom wall as the coloured inserts which are pre-fitted on the mould and which are housed precisely in the cup delimited by each of said annular ribs.

According to the method in question, once each of the cups has been mounted with its respective insert, the cup is shut with a sealing cap consisting of a shaped pad premoulded in the same material as the sole, which is however heated to melting point without attaining the cross-linking and decomposition temperature of the expansion fillers, as previously mentioned for moulding of the inserts.

Each cap is fixed to its respective cup by means of a series of closely packed rods projecting from the internal surface of the cover which shuts the mould matrix.

When the cover of the mould is shut over the matrix, said rods penetrate into said caps, which are thus held securely over the cups even during the injection phase, despite the fact that the flow of liquid enters the mould at a very high pressure.

Moreover, the seal ensured by said caps together with the annular ribs on the bottom of the matrix impression, exclude any possible mixing between the fluid mass injected into the mould and that of the inserts which melt in their respective cups.

For major clarity the description of the process continues with reference to the enclosed drawings which are intended for purposes of illustration and not in a limiting sense, where:

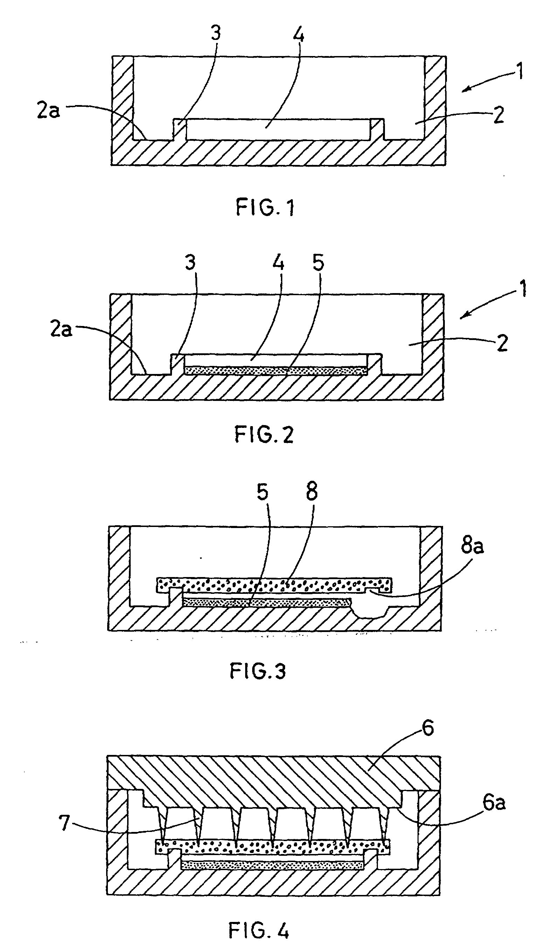

- Fig. 1 shows the open mould cross-sectioned with a transversal plane of its impression;
- Fig. 2 is similar to fig. 1 with the addition of an insert mounted in the impression of the mould;
- Fig. 3 is similar to fig. 2 with the addition of the cap which shuts the cup housing the insert;
- Fig. 4 is similar to fig. 3 with the addition of the mould cover;
- Fig. 5 shows the treading surface of a sole realised using the method according to the invention;
- Fig. 6 is a cross-section of the sole in Fig. 5 with the transversal plane VI-VI of fig. 5.

The method according to the invention entails the use of a special mould (1) having an impression (2) with the same number of annular ribs (3) on its bottom wall (2a) delimiting the same number of cups (4) conforming exactly to the coloured inserts (5) pre-mounted on the mould (1); the cover (6) of mould (1) having in proximity of each of the cups (4), a series of closely packed rods (7) projecting from its internal surface (6a).

The method according to the invention also involves the use of inserts (5) consisting of plates moulded in the same materials used to mould the sole, but of a different colour; said inserts (5) being moulded by heating the granules of expanding and cross-linking "EVA" based compound to melting point, without however reaching the higher temperature which triggers the cross-linking and decomposition of the expanding fillers.

The method according to the invention also entails the use of caps (8) which shut said cups (4), consisting of pads moulded in the same material used to mould the sole; the caps (8) being moulded by heating the granules of expanding and cross-linking "EVA" based compound to melting point, without however reaching the higher temperature which triggers the cross-linking and decomposition of the expanding fillers.

In particular, said caps (8) are provided on their bottom surface with a perimeter groove (8a) designed to couple precisely with the annular rib (3) delimiting each cup (4) housing the inserts (5).

In order to ensure said coupling, the thickness of the coloured inserts (5) is inferior to the height of the annular ribs (3).

In consideration of the foregoing, the method according to the invention provides that the moulding phase of the sole occurs as follows:
a) - fitting onto the mould (1) of the inserts (5), each of which is housed into a corresponding cup (4);
b) - fitting onto the mould (1) of the caps (8), each of which is housed above a corresponding cup (4) so as to ensure coupling between the perimeter groove (8a) of the cap (8) and the rib (3) delimiting the cup (4);
c) - closing of the mould;
d) - injection of the moulding material;
e) - opening of the mould after a time that ensures cross-linking and decomposition of the expanding fillers simultaneously in the injected mass, in the molten mass of the inserts (5) and in the molten mass of the caps (8).

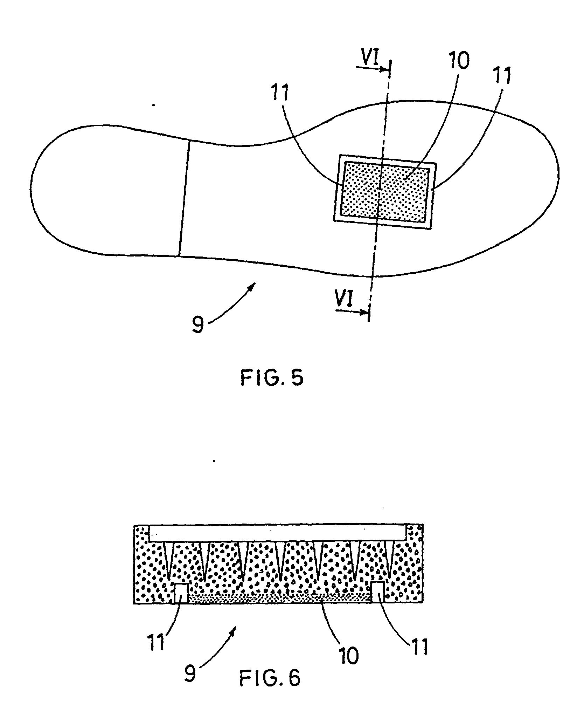

As shown in figures 5 and 6, the sole (9) obtained with the method according to the invention is provided on its treading surface with one or more sections (10) of different colours with respect to that of the sole (9) delimited by a run (11) that corresponds to the impression produced by the annular rib (3) delimiting the cup (4) in which the insert (5) is fitted and from which each coloured section (10) is produced.

## Claims

1. A method for injection moulding soles realised with expanding and cross-linking "EVA" based compounds having coloured sections on the treading surface, having the steps:
- the provision of shaped inserts (5) consisting of plates moulded with the same type of expanding and cross-linking "EVA" based compound used to mould the sole, but of a different colour, whose granules are heated to melting point without however reaching the higher temperature which triggers cross-linking and decomposition of the expanding fillers;
- provision and use of a special mould (1) whose impression (2) is provided on its bottom wall (2a) with the same number of annular ribs (3) delimiting the same number of cups (4) exactly conforming to the above coloured inserts (5), while the cover (6) of the mould (1) is provided on each of the cups (4) with a series of closely packed rods (7) projecting from its internal surface (6a);
- the provision of caps (8) which seal said cups (4), consisting of shaped pads moulded with the same expanding and cross-linking "EVA" based compound used to mould the sole, whose granules are heated to melting point without however attaining the higher temperature which triggers cross-linking and decomposition of the expanding fillers;
- fitting onto the mould (1) of the inserts (5), each of which is housed into its respective cup (4);
- fitting onto the mould (1) of the caps (8), each of which is housed above its corresponding cup (4);
- closing of the mould (1);
- injection of the moulding material into the mould (1);
- opening of the mould (1) after a time that ensures cross-linking and decomposition of the expanding fillers simultaneously in the injected mass, in the molten mass of the inserts (5) and in the molten mass of the caps (8).

2. A method according to the previous claim **characterised by** the provision of caps (8) to shut said cups (4) having a perimeter groove (8a) at the bottom which couples with the annular rib (3) of the cup (4) shut by the cap (8).

3. An injection moulded sole realised in expanding and cross-linking "EVA" based compound having coloured sections on its treading surface, and produced with the method described in the previous claims.

## Patentansprüche

1. Methode zum Spritzgießen von Sohlen aus schäumbarer und vernetzbarer "EVA"-Verbindung mit farbigen Zonen auf der Lauffläche, welche Methode folgende Phasen umfasst:
- Vorbereitung von Intarsien (5) bestehend aus spritzgegossenen Plättchen, die aus derselben schäumbaren und vernetzbaren "EVA"-Verbindung wie die Sohle, allerdings in einer anderen Farbe hergestellt sind, wobei darauf zu achten ist, dass das Granulat dieser Verbindung auf Schmelztemperatur gebracht werden muss, ohne die (höher liegende) Temperatur zu erreichen, bei welcher die Vernetzung einsetzt und die Zersetzung des Expansionsfüilstoffes stattfindet;
- Die Vorbereitung einer Spezialspritzgussform (1), deren Abdruck (2) an der Bodenwand (2a) zahlreiche ringförmige Rippen (3) aufweist, die zur Abgrenzung ebenso vieler Vertiefungen (4) dienen, deren Form genau den zuvor genannten farbigen Intarsien entspricht, während der Deckel (6) der Spritzgussform (1) an der Stelle der besagten Vertiefungen (4) ein dichtes Bündel von Stützen (7) aufweist, die aus seiner Innenfläche (6a) herausragen;
- Vorbereitung von Stöpseln (8) zur Versiegelung der besagten Vertiefungen (4), bestehend aus spritzgegossenen Formmatten, die ebenso wie die Sohle aus einer schäumbaren und vernetzbaren "EVA"-Verbindung hergestellt sind, wobei darauf zu achten ist, dass das Granulat dieser Verbindung auf Schmelztemperatur gebracht werden muss, ohne die (höher liegende) Temperatur zu erreichen, bei welcher die Vernetzung einsetzt und die Zersetzung des Expansionsfüllstoffes stattfindet;
- Einlegen der Intarsien (5) ins Innere der Spritzgussform (1), wobei ein jedes Intarsium seinen Sitz in der entsprechenden Vertiefung (4) hat;
- Einlegen der Stöpsel (8) ins Innere der Spritzgussform (1), wobei ein jeder Stöpsel seinen Sitz über der entsprechenden Vertiefung (4) hat;
- Verschließen der Spritzgussform (1);
- Einspritzen des Spritzgussmaterials in die Spritzgussform (1);
- Öffnen der Spritzgussform (1) nach einer ausreichend langen Zeit, um eine gleichzeitig stattfindende Vernetzung und Zersetzung des Expansionsfüllstoffes sowohl in der eingespritzten Kunststoffmasse als auch in der Schmelzmasse der Intarsien (5) und der Schmelzmasse der Stöpsel (8) zu gewährleisten.

2. Methode gemäß vorstehendem Anspruch, **dadurch gekennzeichnet, dass** die Vorbereitung von Stöpseln (8) zum Versiegeln der Vertiefungen (4) vorgesehen ist, welche auf der Unterseite eine umlaufende Rille (8a) besitzen, in welche sich die ringförmige Rippe (3) der mittels Stöpsel (8) versiegelten Vertiefung (4) einfügt.

3. Spritzgegossene Sohle aus schäumbarer und vernetzbarer "EVA"-Verbindung, deren Lauffläche farbige Zonen aufweist, die mit der in den vorhergehenden Ansprüchen beschriebenen Methode hergestellt werden.

## Revendications

1. Procédé de moulage par injection de semelles réalisées avec des composés à base de "EVA" expansible et apte à la réticulation, semelles présentant sur la plante de piétinement des zones coloriées, dont les phases sont les suivantes :
- La préparation d'inserts façonnés (5), consistants en plaquettes moulées avec le même type de composé à base de "EVA" expansible et apte à la réticulation utilisé pour le moulage de la semelle, mais de couleur différente, ayant soin de porter les granules de ce composé à la température de fusion, sans pour autant atteindre la température, plus élevée, où commence le phénomène de la réticulation et de la décomposition des charges expansibles ;
- La prédisposition d'un moule spécial (1), dont l'empreinte (2) présente, en correspondance de sa paroi de fond (2a), des nervures (3), ayant développement annulaire, aptes à délimiter autant de cuvettes (4) exactement conformes aux susdits inserts coloriés (5), tandis que le couvercle (6) du moule (1) présente, en position correspondante à chacune des susdites cuvettes (4), des grappes serrées de pieux (7) forjettant de sa face interne (6a) ;
- la préparation de bouchons (8) pour sceller les susdites cuvettes (4), bouchons consistant en petits matelas façonnés et moulés avec le même type de composé à base de "EVA" expansible et apte à la réticulation utilisé pour le moulage de la semelle, ayant soin de porter les granules de ce composé à la température de fusion, sans pour autant atteindre la température, plus élevée, où commence le phénomène de la réticulation et de la décomposition des charges expansibles ;
- le chargement à l'intérieur du moule (1) des inserts (5), chacun desquels devant être positionné dans la correspondante cuvette de logement (4) ;
- le chargement à l'intérieur du moule (1) des bouchons (8), chacun desquels devant être positionné au-dessus de la correspondante cuvette de logement (4) ;
- la fermeture du moule (1) ;
- l'injection du matériel de moulage dans le moule (1) ;
- l'ouverture du moule (1) après un délai de temps suffisant pour que le phénomène de la réticulation et de la décomposition des charges expansibles puisse s'accomplir simultanément, tant au sein de la masse injectée, qu'au sein de la masse fondue des inserts (5) et qu'au sein de la masse fondue des bouchons (8).

2. Procédé selon la revendication précédente, **caractérisé en ce qu'**il prévoit la préparation de bouchons (8) pour sceller lesdites cuvettes (4) présentant, sur leur face inférieure, une gorge de périmètre (8a) apte à se coupler avec la nervure annulaire (3) de la cuvette (4) scellée par le bouchon (8).

3. Semelle moulée par injection dans des composés à base de "EVA" expansible et réticulable, présentant sur la plante de piétinement des zones coloriées, réalisée selon la méthode dont aux revendications précédentes.
